**Europäisches Patentamt**

**European Patent Office**

**Office européen des brevets**

(11) Publication number: **0 173 795**
**B1**

# EUROPEAN PATENT SPECIFICATION

(45) Date of publication of patent specification: **06.06.90**

(21) Application number: **85103845.5**

(22) Date of filing: **29.03.85**

(51) Int. Cl.⁵: **B 32 B 27/30, B 44 C 5/04**

(54) Flexible, fire-resistant, decorative laminates and methods of manufacture thereof.

(30) Priority: **31.08.84 US 646570**

(43) Date of publication of application:
**12.03.86 Bulletin 86/11**

(45) Publication of the grant of the patent:
**06.06.90 Bulletin 90/23**

(84) Designated Contracting States:
**DE FR GB IT NL**

(56) References cited:
**GB-A-1 566 086**
**US-A-3 616 192**
**US-A-4 054 711**
**US-A-4 305 981**

(73) Proprietor: **THE BOEING COMPANY**
**Younker Building (2nd Floor) 3900 E. Valley Highway**
**Renton Washington 98055 (US)**

(72) Inventor: **Mottaz, Donald Arthur**
**410 NE Birch**
**Issaquah, WA 98027 (US)**
Inventor: **Kowalski, Joseph Chester**
**7408, 197th Street S.E.**
**Snohomish, WA 98290 (US)**
Inventor: **Cole, Berton Arthur**
**17913 NE 13th St.**
**Bellevue, WA 98008 (US)**

(74) Representative: **Bruin, Cornelis Willem et al**
**Octrooibureau Arnold & Siedsma Isartorplatz 5**
**D-8000 München 2 (DE)**

Courier Press, Leamington Spa, England.

## Description

This invention relates to composite, flexible, fire-resistant decorative laminates which can be used as wall coverings for the bulkhead panels in the interior passenger compartments of commercial aircraft, and also to a method of producing such laminates.

Today's commercial aircraft are subject to very strict requirements with regard to their ability to withstand fire and to emit only minor quantities of smoke or other toxic fumes when exposed to flames or heat. The standards therefor are established by the FAA under Code Regulation "FAR 25" and are constantly updated and made more rigorous. It will be clear that materials intended for use in wall coverings of passenger compartments must be capable to meet and preferably exceed such standards in order to approve for use in aircraft.

The invention is particularly concerned with forming fire-resistant decorative laminates in the form of wall coverings in commercial aircraft which will not only meet but preferably exceed the standards that are currently in existence and which will enhance the durability of the coverings and improve the fire-resistant properties thereof.

It is common practice nowadays to provide the bulkhead panels in the passenger compartments of aircraft with decorative wall coverings and to make such coverings of various types of materials. It further has been known that where such decorative wall coverings comprise a flexible wall paper laminate, the incorporation of an aluminium foil which becomes an integral part of the covering, will produce a laminate with improved fire-resistant properties.

Various efforts have been made already to produce these types of decorative laminates, but numerous manufacturing difficulties have been encountered therein. Thus, the aluminium foils which may tend to be as thick as 0.0381 mm, have proven extremely difficult to handle without producing wrinkles and/or creases in the foil. Such wrinkles ultimately show up in the finished decorative laminate. In addition thereto, finished decorative laminates including polyvinylfluoride films and aluminium foils exhibit less texture than desired; and when applied to a bulkhead panel, small lines tend to appear from the sweeping operation used during application.

Numerous approaches have been suggested in the prior art for forming laminar structures having fire-resistant characteristics. Typical of these disclosures are those found in, for example, US—A—3 092 530 (a heat protective sheathing for missiles employing an aluminium foil); US—A—3 677 882 (an industrial laminate, including inter alia a copper foil and a polyvinylfluoride film); US—A—4 105 820 (a laminate including an aluminium foil and polyethylene films); US—A—4 170 675 (superimposed layers of metal foils, plastics and wire mesh); US—A—4 282 276 (a laminate including layers of Kraft paper, fiberglass and aluminium foil);

US—A—4 292 353 and US—A—4 296 170 (laminates including a urethane modified polyisocyanurate foam as a core material and an aluminium foil as surface material bonded thereto); US—A—4 395 453 (a multi-layered laminate including layers of aluminium and fibrous materials); and US—A—4 401 707 (a multi-layered fabric including foil/fabric layers).

Other representative patents of interest include US—A—3 655 426; US—A—3 767 500; US—A84 054 710 and US—A—4 054 711; and US—A—4 305 981 which disclose various types of laminar structures including inter alia one or more sheets of polyvinylfluoride and one or more sheets of aluminium foil. Moreover, GB—A—1 566 086 discloses a decorative laminate comprising a core layer of resin-impregnated paper sheets and a surface layer of metal foil bonded to an underlying paper sheet. Further, US—A—3 616 192 discloses decorative polyvinylfluoride layers incorporating specific printing formulations for providing a decorative image on the polyvinylfluoride film which has desired inert properties.

In general, however, the foregoing documents simply do not relate to lightweight, flexible, fire-resistant, decorative laminates of the type employing aluminium foils wherein provision is made for enabling the use of relatively thin aluminium foils without encountering the wrinkling problems generally associated with such foils, and wherein adhesive bonding of the foils to an underlying flexible panel-like base layer of paper or paper-like material is simplified.

It is a specific object of the invention to provide improved composite, flexible, fire-resistant, decorative laminates suitable for use as interior wall and/or bulkhead panel coverings in commercial aircraft and having the ability to meet and exceed the fire-resistant standards established by the FAA such as Regulation "FAR 25".

A further object of the present invention is to provide an improved method for manufacturing such composite, flexible, fire-resistant, decorative laminates, which permits the incorporation of an interior layer of relatively thin fire-resistant aluminium foil without encountering the normal wrinkling problems inherent with handling of such materials, and which readily permits bonding of the aluminium foil to an underlying flexible paper or paper-like base layer.

Another object is to provide a laminate and manufacturing method of the aforesaid type wherein the decorative surface of the composite, fire-resistant laminate is protected by an outer layer of polyvinylfluoride, thereby enhancing the maintenance characteristics of the laminate in use.

In a first aspect, the invention provides a composite, flexible, fire-resistant decorative laminate, including a fire-resistant aluminium foil and a decorative layer, said laminate comprising in succession:

a) a flexible panel-like base layer of paper or paper-like material,

b) a fire-resistant laminate comprising a first layer of polyvinylfluoride in face-to-face overlying relation to said flexible panel-like base layer and an aluminium foil overlying said polyvinylfluoride layer and bonded thereto;

c) an adhesive layer bonding said first polyvinylfluoride layer to said flexible panel-like base layer;

d) a resinous embossing film bonded in face-to-face overlying relation to said aluminium foil; and

e) a flexible decorative layer bonded in face-to-face overlying relation to the resinous embossing film.

Such laminates have improved fire-resistant characteristics, reduced smoke and/or toxic fume emission, reduced flame spreading, non-dripping and non-blistering characteristics when exposed to flame and/or heat. Further, they have durability and ease of maintenance in use.

In a second aspect, the invention provides a method of producing a composite, flexible, fire-resistant decorative laminate including a fire-resistant aluminium foil and a decorative layer, said method comprising the steps of:

a) forming a fire-resistant laminate by bonding a thin aluminium foil in face-to-face overlying relation to a first sheet of polyvinylfluoride;

b) adhesively bonding the polyvinylfluoride sheet of said fire-resistant laminate to a flexible panel-like base layer of paper or paper-based material;

c) bonding a resinous embossing film in face-to-face overlying relation to the aluminium foil of said fire-resistant laminate; and

d) finally bonding a flexible decorative sheet in face-to-face overlying relation to the resinous embossing film.

In this method, the normal wrinkling problems, inherent with handling of relatively thin fire-resistant aluminium foils have been overcome due to the fact that the aluminium foil is bonded first to a sheet of polyvinylfluoride; the resulting two-layer laminate may be easily bonded then to an underlying flexible paper or paper-like base layer and to overlying decorative layers.

In specific embodiments of the decorative laminate and the method of the invention, the decorative layer or sheet is in itself a three-layered or two-layered laminate comprising a decorative image or photograph or print covered by a layer of clear transparent polyvinylfluoride. The latter layer forms an outer protective layer then and will enhance the maintenance characteristics of the total laminate in use.

Further characteristics of the invention will become apparent upon reading the following detailed description and upon reference to the attached drawing, in which:

Figure 1 is a fragmentary perspective view of a portion of a composite, flexible, fire-resistant, decorative laminate or wall covering embodying features of and made in accordance with the present invention; wherein successive layers have progressively been cut away so as to expose portions of the underlying layers;

Fig. 2 is a side elevational view in diagrammatic form of a wall covering embodying the invention and having eight (8) discrete layers; and

Fig. 3 is a diagrammatic side elevational view similar to Fig. 2, but here depicting a modified form of the wall covering of the invention employing only seven (7) discrete layers.

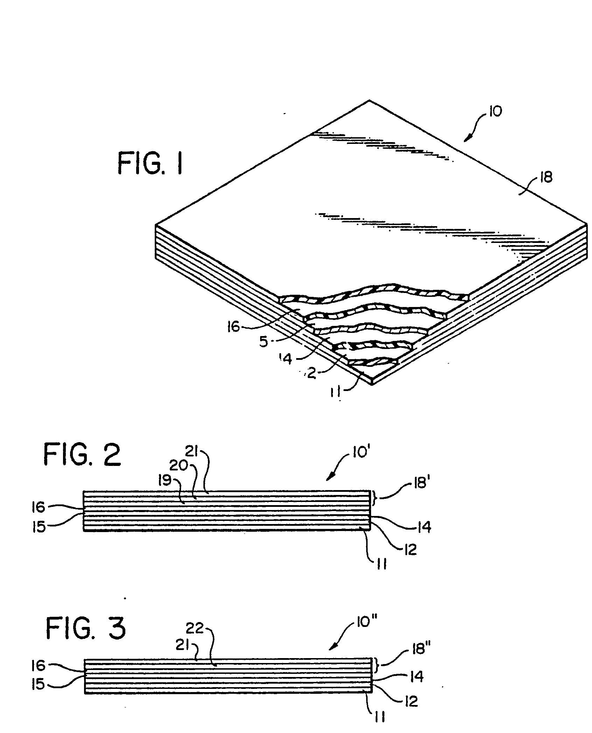

The composite, flexible, fire-resistant, decorative laminate of the invention has been indicated generally with the reference number 10 in Fig. 1. This laminate 10 includes: (a) a flexible, panel-like, base layer 11 which may be formed of for example paper, (b) a superimposed layer 12 of any suitable adhesive material; (c) a layer 14 of inert polyvinylfluoride adhesively bonded on its undersurface to the adjacent layer 12 of adhesive material; (d) an intermediate layer 15 of relatively thin, fire-resistant aluminium foil (e.g. a layer 15 having a thickness on the order of approximately 0.0178 mm); (e) any suitable and conventional resinous embossing film 16 disposed in overlying face-to-face bonded engagement with the aluminium foil layer 15; and (f) an uppermost or outer exposed decorative layer 18 which may itself comprise a laminar structure.

The laminate 10 depicted in Fig. 1 is formed by initially fabricating, in any suitable and completely conventional sheet laminating system, an inner laminate comprising a continuous sheet of aluminium foil 15 which is bonded directly to an underlying continuous inert polyvinylfluoride sheet 14. Thus, the arrangement is such that relatively thin and lightweight sheets of fire-resistant aluminium foil 15 (for example, sheets on the order of only 0.0178 mm thick) are bonded directly to and in face-to-face relation with an inert polyvinylfluoride sheet 14 which may be on the order of 0.05 mm thick so as to form a relatively thin Al/PVF laminate 15/14 which can then be handled with relative ease during subsequent steps in the overall fabricating process without encountering the wrinkling and/or creasing problems inherently faced dealing with thin aluminium foils. Moreover, the provision of an inert polyvinylfluoride layer integral with the aluminium layer facilitates bonding of the laminate 15/14 to an underlying base layer 11 formed of paper or paper-like material.

When the continuous, integral, fire-resistant Al/PVF laminate 15/14 has been formed, it is adhesively bonded to the underlying paper or paper-like base layer 11 by means of any suitable conventional and compatible adhesive material 12. Thereafter, a conventional resinous embossing film 16 is applied in overlying face-to-face bonded relation to the aluminium foil 15 of the Al/PVF laminate 15/14. Finally, any desired exposed flexible decorative sheet or layer or laminate 18 is bonded to the resinous embossing film 16 to form a composite, flexible, fire-resistant, decorative laminate in accordance with the present invention.

If desired, those skilled in the art will appreciate that the adhesive laminate 12 and paper or paper-like base layer 11 may simply comprise the lower removable paper sheet and intermediate adhesive layer of any conventional, commercially available paper/adhesive/paper laminate (not shown) from which one outer paper layer has been removed prior to adhesively bonding the Al/PVF laminate 15/14 to the underlying paper-like base layer 11. As a consequence of this arrangement, when the flexible, fire-resistant, decorative laminate 10 is to be installed as a wall covering on the interior bulkhead panels of a commercial aircraft, it is merely necessary to remove the underlying paper layer 11 from the laminate, thus exposing the adhesive surface 12 which can then be placed in contact with and adhesively bonded to the underlying bulkhead panel structure (not shown).

Turning next to Fig. 2, there has been illustrated a modified form of the composite, flexible, fire-resistant, decorative laminate, generally indicated at 10', which is shown here as consisting of eight (8) discrete layers as opposed to the six (6) discrete layers depicted in Fig. 1. In this instance, the outer or exposed decorative sheet 18' itself comprises a laminar construction consisting of: (a) a sheet of polyvinylfluoride 19, which may be on the order of 0.05 mm thick, in overlying, face-to-face, bonded relation to the resinous embossing film 16; (b) an image layer 20 formed, for example, by a conventional silkscreening process; and (c) an outer protective transparent layer (21) of clear polyvinylfluoride which may, for example be on the order of about 0.025 mm thick. Thus, the outermost inert polyvinylfluoride layer 21 serves to protect the silkscreen image 20 and permits of ease of maintenance in use, permitting the laminate 10' to be wiped or washed without damaging the decorative silkscreened image 20.

Referring to Fig. 3, another modified form of the laminate has been depicted which is similar to those shown in Figs. 1 and 2. This modified laminate, generally indicated at 10'', includes seven (7) discrete layers wherein the outermost decorative sheet 18'' comprises a laminar structure having an inner layer 22, (which may comprise a photograph, print or the like) and an outer, transparent protective clear polyvinylfluoride layer 21 identical to that previously described in conjunction with Fig. 2.

Flexible, fire-resistant, decorative laminates of the type described herein have been produced on a mass-production basis without evidencing any of the problems heretofore encountered when attempting to form fire-resistant laminates having relatively thin, aluminium foil layers. The inert Al/PVF laminate 15/14 permits of ease of handling during the fabricating process, and permits of formation of desired laminates having excellent decorative characteristics in terms of texture. At the same time, this Al/PVF laminate is permitting the final laminate to be applied to bulkhead panels with ease and without producing undesired lines in the finished products.

Flame tests performed on panels incorporating the invention have been conducted in accordance with FAA (Fire Code Regulation FAR 25.853). According to this Regulation, the panel is subjected to edge burning by a flame maintained at 775°C for a period of 60 sec and the requirement is that the material be self-extinguishing after 15 sec and that it be non-dripping. Such tests have demonstrated that the composite, flexible laminates fully meets and exceeds the code requirements and produces an average burn length of 101.6 mm.

Those skilled in the art will readily appreciate that the particular thickness of the various layers may vary without departing from the spirit of the invention. Thus, while foils 15 of 0.0178 mm and thicker have been tested when bonded to polyvinylfluoride sheets on the order of 0.05 mm thick, the invention permits of use of thinner aluminium foils and/or polyvinylfluoride sheets, if desired. Moreover, the thickness of the polyvinylfluoride sheets 19 and 21 (compare Figs. 2 and 3) may readily be increased and/or decreased dependent only upon the end results desired. Suffice it to say that the important features of the invention include the formation of an intermediate fire-resistant Al/PVF laminate 15/14 which permits ease of handling of the aluminium foil in the fabricating process without undue danger of creasing and/or wrinkling of the foil. Further, inert materials such as polyvinylfluoride are used to improve fire-resistant properties and sometimes to form a transparent protective coating for the flexible laminate.

## Claims

1. A composite flexible, fire-resistant decorative laminate including a fire-resistant aluminium foil and a decorative layer,

   said laminate comprising in succession:

   a) a flexible panel-like base layer (11) of paper or paper-based material,

   b) a fire-resistant laminate comprising a first layer of polyvinylfluoride (14) in face-to-face overlying relation to said panel-like base layer (11), and an aluminium foil (15) overlying said polyvinylfluoride layer and bonded thereto,

   c) an adhesive layer (12) bonding said first layer of polyvinylfluoride (14) to said panel-like base layer (11),

   d) a resinous embossing film (16) bonded in face-to-face overlying relation to said aluminium foil (15),

   e) a flexible decorative layer (18) bonded in face-to-face overlying relation to the resinous embossing film (16).

2. The laminate as claimed in claim 1, wherein the decorative layer is a laminate (18'), comprising a decorative silkscreened image (20) sandwiched between a second layer of polyvinylfluoride (19) and a third layer of clear transparent polyvinylfluoride (21), the second polyvinylfluoride layer (19) being bonded in face-to-face overlying relation to the resinous embossing film (16) and the layer of clear transparent polyvinylfluoride (21) forming an outer protective layer.

3. The laminate as claimed in claim 1, wherein the decorative layer is a laminate (18'') comprising a photograph or a decorative print (22) covered by a layer of clear transparent polyvinylfluoride (21), said latter layer (21) forming an outer protective layer.

4. The laminate as claimed in claims 1-3, wherein the aluminium foil (15) and the first layer (14) have thicknesses on the order of 0.0178 mm and 0.05 mm, respectively.

5. The laminate as claimed in claims 1-4, wherein the second sheet of polyvinylfluoride (19) has a thickness on the order of 0.05 mm.

6. The laminate as claimed in claims 1-5, wherein the sheet of clear transparent polyvinylfluoride (21) has a thickness on the order of 0.025 mm.

7. A method of producing a composite flexible fire-resistant decorative laminate including a fire-resistant aluminium foil and a decorative layer, said method comprising the steps of:

a) forming a fire-resistant laminate by bonding a thin aluminium foil (15) in face-to-face overlying relation to a first sheet (14) of polyvinylfluoride,

b) adhesively bonding the polyvinylfluoride sheet (14) of said fire-resistant laminate to a flexible panel-like base layer (11) of paper or paper-based material,

c) bonding a resinous embossing film (16) in face-to-face overlying relation to the aluminium foil (15) of said fire-resistant laminate,

d) finally bonding a flexible decorative sheet (18) in face-to-face overlying relation to the resinous embossing film (16).

8. The method as claimed in claim 7, wherein the decorative sheet is a laminate (18'') comprising a decorative silkscreened image (20) sandwiched between a second sheet of polyvinylfluoride (19) and a third sheet of clear transparent polyvinylfluoride (21) and wherein said laminate (18') is bonded such to the resinous embossing film (16) that the clear transparent polyvinylfluoride sheet (21) will form an outer protective layer.

9. The method as claimed in claim 8, wherein the decorative sheet is a laminate (18'') comprising a photograph or a decorative print (22) applied onto a sheet of clear transparent polyvinylfluoride (21) and wherein said laminate (18'') is bonded such to the resinous embossing film (16) that the clear transparent polyvinylfluoride sheet (21) will form an outer protective layer.

10. The method as claimed in claims 7-9, wherein the aluminium foil (15) and the first sheet of polyvinylfluoride (14) have thicknesses on the order of 0.0178 mm and 0.05 mm, respectively.

11. The method as claimed in claims 7-10, wherein the second sheet of polyvinylfluoride (19) has a thickness on the order of 0.05 mm.

12. The method as claimed in claims 7-11, wherein the sheet of clear transparent polyvinylfluoride (21) has a thickness on the order of 0.025 mm.

**Patentansprüche**

1. Flexibles, feuerbeständiges dekoratives Verbundlaminat mit Einschluß einer feuerbeständigen Aluminiumfolie und einer dekorativen Schicht,

dadurch gekennzeichnet, daß das Laminat nacheinander folgendes enthält:

a) eine flexible tafelartige Grundschicht (11) aus Papier oder einem auf der Grundlage von Papier aufgebauten Material,

b) ein feuerbeständiges Laminat, enthaltend eine erste Schicht von Polyvinylfluorid (14) in Oberfläche-an-Oberfläche übereinanderliegender Beziehung an der genannten tafelartigen Grundschicht (11), und eine Aluminiumfolie (15), die über der genannten Polyvinylfluoridschicht liegt und damit verbunden ist,

c) eine Klebschicht (12), die die erste Schicht aus Polyvinylfluorid (14) mit der genannten tafelartigen Grundschicht (11) verbindet,

d) ein Harzprägungsfilm (16), der in Oberfläche-an-Oberfläche übereinanderliegender Beziehung an die genannte Aluminiumfolie (15) gebunden ist,

e) eine flexible dekorative Schicht (18), die in Oberfläche-an-Oberfläche übereinanderliegender Beziehung an den Harzprägungsfilm (16) gebunden ist.

2. Laminat nach Anspruch 1, dadurch gekennzeichnet, daß die dekorative Schicht ein Laminat (18') ist, das ein dekoratives Seidensiebbild (20), das zwischen eine zweite Schicht aus Polyvinylfluorid (19) und eine dritte Schicht aus klarem transparentem Polyvinylfluorid (21) eingelegt ist, enthält, wobei die zweite Polyvinylfluoridschicht (19) in Oberfläche-an-Oberfläche übereinanderliegender Beziehung an den Harzprägungsfilm (16) gebunden ist und die Schicht aus dem klaren transparenten Polyvinylfluorid (21) eine äußere Schutzschicht bildet.

3. Laminat nach Anspruch 1, dadurch gekennzeichnet, daß die dekorative Schicht ein Laminat (18'') ist, das eine Fotografie oder einen dekorativen Druck (22) enthält, die bzw. der von einer Schicht aus klarem transparentem Polyvinylfluorid (21) bedeckt ist, wobei die letztgenannte Schicht (21) eine äußere Schutzschicht bildet.

4. Laminat nach den Ansprüchen 1 bis 3, dadurch gekennzeichnet, daß die Aluminiumfolie (15) und die erste Schicht (14) Dicken in der Größenordnung von 0,0178 mm bzw. 0,05 mm haben.

5. Laminat nach den Ansprüchen 1 bis 4, dadurch gekennzeichnet, daß das zweite Blatt aus Polyvinylfluorid (19) eine Dicke in der Größenordnung von 0,05 mm hat.

6. Laminat nach den Ansprüchen 1 bis 5, dadurch gekennzeichnet, daß das Blatt aus dem klaren transparenten Polyvinylfluorid (21) eine Dicke in der Größenordnung von 0,025 mm hat.

7. Verfahren zur Herstellung eines flexiblen feuerbeständigen dekorativen Laminats, das eine feuerbeständige Aluminiumfolie und eine dekorative Schicht einschließt, gekennzeichnet durch die Stufen

a) Bildung eines feuerbeständigen Laminats durch Bindung einer dünnen Aluminiumfolie (15) in Oberfläche-an-Oberfläche übereinanderliegender Beziehung an ein erstes Blatt (14) aus Polyvinylfluorid,

b) klebendes Binden des Polyvinylfluoridblatts (14) des genannten feuerbeständigen Laminats an eine flexible tafelartige Grundschicht (11) aus Papier oder einem Material auf der Grundlage von Papier,

c) Binden eines Harzprägungsfilms (16) in Oberfläche-an-Oberfläche übereinanderliegender Beziehung an die Aluminiumfolie (15) des genannten feuerbeständigen Laminats,

d) am Ende erfolgendes Binden einer flexiblen dekorativen Schicht (18) in Oberfläche-an-Oberfläche übereinanderliegender Beziehung an den Harzprägungsfilm (16).

8. Verfahren nach Anspruch 7, dadurch gekennzeichnet, daß das dekorative Blatt ein Laminat (18') ist, das ein dekoratives Seidensiebbild (20), das zwischen eine zweite Schicht aus Polyvinylfluorid (19) und eine dritte Schicht aus klarem transparentem Polyvinylfluorid (21) eingelegt ist, enthält, und wobei das genannte Laminat (18') an den Harzprägungsfilm (16) derart gebunden ist, daß das klare transparente Polyvinylfluoridblatt (21) eine äußere Schutzschicht bildet.

9. Verfahren nach Anspruch 8, dadurch gekennzeichnet, daß das dekorative Blatt ein Laminat (18'') ist, das eine Fotografie oder einen dekorativen Druck (22) umfaßt, die bzw. der auf ein Blatt aus klarem transparentem Polyvinylfluorid (21) aufgebracht ist, und daß das genannte Laminat (18'') an den Harzprägungsfilm (16) derart gebunden ist, daß das klare transparente Polyvinylfluoridblatt (21) eine äußere Schutzschicht bildet.

10. Verfahren nach den Ansprüchen 7 bis 9, dadurch gekennzeichnet, daß die Aluminiumfolie (15) und das erste Blatt aus Polyvinylfluorid (14) Dicken in der Größenordnung von 0,0178 mm bzw. 0,05 mm haben.

11. Verfahren nach den Ansprüchen 7 bis 10, dadurch gekennzeichnet, daß das zweite Blatt aus Polyvinylfluorid (19) eine Dicke in der Größenordnung von 0,05 mm hat.

12. Verfahren nach den Ansprüche 7 bis 11, dadurch gekennzeichnet, daß das Blatt aus dem klaren transparenten Polyvinylfluorid (21) eine Dicke in der Größenordnung von 0,025 mm hat.

**Revendications**

1. Stratifié décoratif, ignifuge, souple, composite comprenant une feuille d'aluminium ignifuge et une couche décorative, ledit stratifié comprenant successivement:

a) une couche de base (11) souple, analogue à un panneau, en papier ou en un matériau semblable à du papier,

b) un stratifié ignifuge comprenant une première couche de fluorure de polyvinyle (14) recouvrant ladite couche de base (11) analogue à un panneau en lui faisant face et une feuille d'aluminium (15) recouvrant ladite couche de fluorure de polyvinyle et étant liée à celle-ci,

c) une couche adhésive (12) liant ladite première couche de fluorure de polyvinyle (14) à ladite couche de base (11) souple analogue à un panneau,

d) une pellicule résineuse de gauffrage (16) liée à ladite feuille d'aluminium (15) en le recouvrant face à face, et

e) une couche décorative souple (18) liée à la pellicule résineuse de gauffrage (16) en la recouvrant face à face.

2. Stratifié selon la revendication 1, dans lequel la couche décorative est un stratifié (18') comprenant une image sérigraphique décorative (20) insérée entre une seconde couche de fluorure de polyvinyle (19) et une troisième couche de fluorure de polyvinyle transparent clair (21), la seconde couche de fluorure de polyvinyle (19) étant liée à la pellicule résineuse de gauffrage (16) en la recouvrant face à face et la couche de fluorure de polyvinyle transparent clair (21) formant une couche protectrice externe.

3. Stratifié selon la revendication 1, dans lequel la couche décorative est un stratifié (18'') comprenant une photographie ou un imprimé décoratif (22) recouvert par une couche de fluorure de polyvinyle transparent clair (21), ladite dernière couche (21) formant une couche protectrice externe.

4. Stratifié selon les revendications 1 à 3, dans lequel la feuille d'aluminium (15) et la première couche (14) ont des épaisseurs de l'ordre de 0,0178 mm et 0,05 mm respectivement.

5. Stratifié selon les revendications 1 à 4, dans lequel la seconde feuille de fluorure de polyvinyle (19) a une épaisseur de l'ordre de 0,05 mm.

6. Stratifié selon les revendications 1 à 5, dans lequel la feuille de fluorure de polyvinyle transparent clair (21) a une épaisseur de l'ordre de 0,025 mm.

7. Procédé de fabrication d'un stratifié décoratif, ignifuge, souple, composite comprenant une feuille d'aluminium ignifuge et une couche décorative, ledit procédé comprenant les étapes de:

a) formation d'un stratifié ignifuge par liaison d'une mince feuille d'aluminium (15) à une première feuille de fluorure de polyvinyle (14) en la recouvrant face à face,

b) collage de la feuille de fluorure de polyvinyle (14) dudit stratifié ignifuge sur une couche de base souple (11), analogue à un panneau, en papier ou en un matériau à base de papier,

c) liaison d'une pellicule résineuse de gauffrage (16) à la feuille d'aluminium (15) dudit stratifié ignifuge, en la recouvrant face à face, et

d) liaison finale d'une feuille décorative souple (18) à la pellicule résineuse de gauffrage (16) en la recouvrant face à face.

8. Procédé selon la revendication 7, dans lequel la feuille décorative est un stratifié (18'') comprenant une image sérigraphique décorative (20) insérée entre une seconde feuille de fluorure de polyvinyle (19) et une troisième feuille de fluorure de polyvinyle transparent clair (21) et dans lequel ledit stratifié (18') est lié à la pellicule résineuse du gauffrage (16) de telle façon que la feuille de fluorure de polyvinyle transparent clair (21) forme une couche protectrice externe.

9. Procédé selon la revendication 8, dans lequel la feuille décorative est un stratifié (18'') comprenant une photographie ou un imprimé décoratif (22) appliqué sur une feuille de fluorure de polyvinyle transparent clair (21) et dans lequel ledit stratifié (18'') est lié à la pellicule résineuse de gauffrage (16) de telle façon que la feuille de fluorure de polyvinyle transparent clair (21) forme une couche protectrice externe.

10. Procédé selon les revendications 7 à 9, dans lequel la feuille d'aluminium (15) et la première couche de fluorure de polyvinyle (14) ont des épaisseurs de l'ordre de 0,0178 mm et 0,05 mm respectivement.

11. Procédé selon les revendications 7 à 10, dans lequel la seconde feuille de fluorure de polyvinyle (19) a une épaisseur de l'ordre de 0,05 mm.

12. Procédé selon les revendications 7 à 11, dans lequel la feuille de fluorure de polyvinyle transparent clair (21) a une épaisseur de l'ordre de 0,025 mm.

FIG. 1

FIG. 2

FIG. 3